# EUROPEAN PATENT SPECIFICATION

(11) **EP 0 953 797 B1**
(45) Date of publication and mention of the grant of the patent: **23.03.2005**
(21) Application number: 99102197.3
(22) Date of filing: 04.02.1999
(51) Int. Cl.: F16L 27/08

(54) **Rotating joint for flexible pipes used in combustible gas supply systems**
Drehkupplung für biegsame Rohre zur Verwendung in Brenngasversorgungssystemen
Joint rotatif pour tuyaux flexibles utilisé dans des systèmes d'alimentation en gaz combustible

(30) Priority: 09.02.1998 IT TO980024 U
(43) Date of publication of application: 03.11.1999
(73) Proprietor: Sail SpA, 10129 Torino (IT)
(72) Inventor: Quaranta, Cosimo, 10123 Torino (IT)
(74) Representative: Robba, Pierpaolo

(56) References cited:
- DE-A- 2 155 070
- FR-A- 1 480 659
- GB-A- 1 263 230
- US-A- 2 338 716
- US-A- 3 841 669

## Description

The present invention relates to a rotating joint for flexible pipes used in systems for supplying a combustible gas.

More precisely the invention is concerned with a rotating joint to be used in association with a metal flexible pipe for supplying a combustible gas to appliances such as gas burning ranges and the like.

As it is known, in order to feed a combustible gas to a gas appliance this latter has to be connected to the gas distribution network.

The connection between the gas distribution network and the device burning the gas is usually accomplished by means of a plastic material hose or a flexible metal sheathing.

The duration of hoses or flexible pipes of plastic material is rather short so that they need a periodical replacement.

Flexible metal sheathings are preferred because of their strength and duration and since they comply with the latest safety rules for using combustible gases.

Nevertheless the installation and use of flexible pipes, particularly of metal pipes demands great care to prevent subjecting the pipe to torsional stresses that could be prejudicial to the pipe sealing and its duration.

Torsional stresses can arise both during the installation and more frequently when the gas appliances are moved, e.g. for cleaning and servicing purposes.

Many rotating joints for flexible pipes are known in the art.

DE 2155070 describes a rotating joint for pipes comprising an outer hollow body, an inner tubular member having a portion housed inside the body, two sealing rings located between the outer body and the inner member and a shoulder adapted to ensure the centering between the outer body and the inner member.

GB 1263230 describes a rotating coupling comprising a first body portion having a bore provided internally with a shoulder, and a second body portion closely fitting said bore and provided with a projection for engaging the shoulder in the first body portion after insertion from one end, permitting the second body portion to project from the other end of the first body portion but preventing further passage therethrough. The second body portion has a bore, which communicates with the bore of the first body portion, is adapted to receive a flexible or solid pipe and is provided with an annular sealing ring located within a recess on the second body portion, said sealing ring being compressed between the first and the second body portions.

FR 1480659 shows a rotating joint comprising a first tubular element provided with a mobile pin in the extension of a second tubular element, said extension acting as a sleeve. The pin is provided with an annular groove adapted to receive a sealing ring and with an annular slot arranged to receive an intemal rib or some recesses formed on the sleeve after the first and the second tubular elements have been assembled together.

US 2,338,716 describes a rotating coupling comprising a tubular stem, a sleeve encircling the stem, a first coupling element mounted on an extemally threaded end of the stem and a second coupling element arranged in the internally threaded end of the sleeve and turnable on the stem.

US 3,841,669 illustrates a rotating joint for pipes including bearing members in the form of annular rings of solid material, the bearing members being retained on a bush connected to one of the pipes and rotating relatively to a sleeve connected to the other pipe, the bearing members sustaining thrust in radial and both axial directions.

It is an object of the present invention to provide a rotating joint for flexible pipes used in systems for feeding a combustible gas to appliances and the like, that complies with the latest safety rules, is less cumbersome as well as easier and cheaper to be manufactured than the prior art devices.

This object of the present invention is accomplished through a rotating joint as claimed in the attached claims.

The invention will now be disclosed in details with particular reference to the attached drawings, only supplied for illustrating a non limiting embodiment thereof, in which:
Fig. 1 is a side sectional view of a rotating joint according to the invention;
Fig. 2 is a perspective view of the joint of Fig. 1;
Fig. 3 is a side sectional view of an alternative embodiment of a joint according to the present invention;

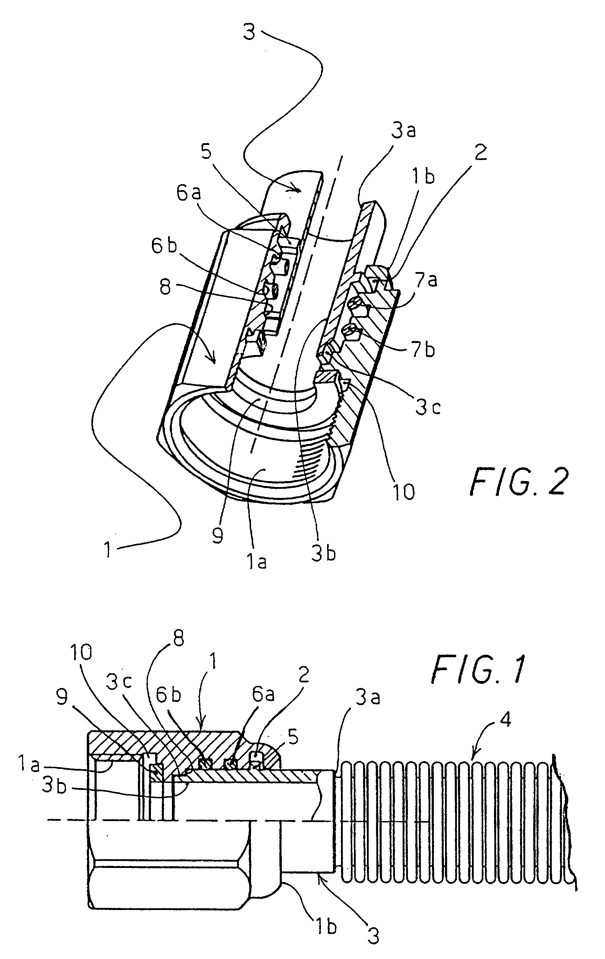

Referring to Figures 1 and 2, a rotating joint according to the invention comprises an outer metal hollow body 1, of substantially cylindrical shape, provided with a first internally threaded end 1a, and a second opposite end 1b, outwardly tapered and provided with an inner annular groove 2.

The joint is connected to a terminal connector (not shown) of the distribution network through the internal thread at the end 1a.

To this aim the outer surface of the body 1 has a hexagonal shape for an easy engagement with a wrench used to screw and unscrew the joint.

A metal hollow cylindrical member 3 is housed inside the body 1, this member having a first end 3a welded to a flexible metal pipe 4 and a second end 3b fitted inside the hollow body 1.

As an alternative, the end 3a can be screwed to a threaded terminal fitting provided at the end of pipe 4.

In accordance with such embodiment the joint would be separable from the pipe 4.

In order to prevent the cylindrical member from coming out of the hollow body 1, the member 3 is provided with an external annular ridge 5 adapted to be received into the groove 2 formed in the cylindrical body 1.

Moreover, to ensure the centering between the cylindrical member 3 and the body 1, and to maintain unaltered such centering over time, even after a large number of joint rotations, the end 3b of the cylindrical member 3 has an end portion of reduced diameter to define a step 3c over which a corresponding shoulder 8 of said hollow body abuts.

Moreover the groove 2 and the shoulder 8 co-operating with the ridge 5 and the step 3c, respectively, define a pair of guide means for the rotation of the outer body 1 around the inner member and viceversa.

Advantageously the cylindrical body 1 is provided with a pair of annular seats 6a and 6b disposed between said groove 2 and the end 1a of the body 1, in correspondence with the portion of the cylindrical member 3 that is located inside the hollow body 1.

The pair of seats 6a and 6b receive as many gaskets or seals 7a and 7b having a substantially toroidal shape and accomplishing a radial seal against the outer surface of the cylindrical member 3 and against the inner surface of the hollow body 1.

The sealing gaskets 7a and 7b are furthermore preferably realised of a fluoro-elastomeric material or a material having a high resistance to heat.

According to the invention, due to the presence of the toroidal gaskets 7a, 7b, the cylindrical member 3 can be rotated with respect to the hollow body 1 without prejudice of the gas sealing both during such rotation and at any mutual position between them.

Moreover the coupling between the cylindrical member 3 and the hollow body 1 achieved through the grooves 2 and the annular ridge 5 and the mechanical pressing of the end 1b of the body 1 against the member 3, prevent the user from tampering with the joint or damaging it.

Again with reference to Figures 1 and 2 the joint of the present invention further comprises an annular gasket 9 received in a corresponding seat 10 formed in the body 1.

The purpose of gasket 9 is to ensure the sealing with the (not shown) terminal fitting of the gas distribution network when the body 1 is connected to such terminal fitting.

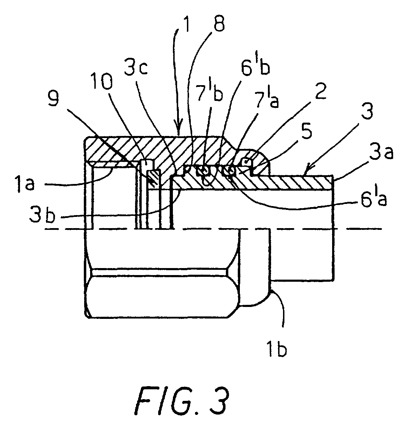

Figure 3 illustrates an alternate embodiment of the invention in which the seats 6'a and 6'b for the corresponding toroidal gaskets 7'a and 7'b are formed in the cylindrical member 3 instead of the hollow body 1.

According to the invention the grooves provided between the body 1 and the member 3 constitute a labyrinth seal preventing the entrance of foreign objects in the gap between the sealing surfaces.

Still in accordance with the invention, the flexible pipe 4 can be connected to the joint by screwing it onto a thread formed at the end 3a of element 3 instead of being welded thereto.

## Claims

1. A rotating joint for flexible pipes used in systems for supplying a combustible gas, comprising:
- an outer hollow body (1) of substantially cylindrical shape;
- an inner tubular member (3) of substantially cylindrical shape, having a first portion housed inside said body (1) and a second portion disposed outside said body (1) and adapted to be joined to a flexible pipe (4) for feeding a combustible gas;
- first guide means (2, 5) for the rotation of said outer body (1) with respect to said inner member (3) and viceversa, and preventing said inner member (3) from coming out of said outer body (1), whereby said joint cannot be disassembled;
- at least one sealing gasket (7a, 7b; 7'a, 7'b) located between said outer body (1) and said inner member (3)
**characterised in that** said inner member (3) comprises an end portion that is housed inside said body (1), said end portion being of reduced diameter and defining a step (3c) which co-operates with a corresponding shoulder (8) formed in said body (1), whereby said step (3c) and said shoulder (8) define second guide means (3c,8) co-operating with said first guide means (2,5) and adapted to ensure the centering between said outer body (1) and said inner member (3).

2. A joint according to claim 1, wherein said first guide means (2, 5) comprises an annular groove (2) formed in said body (1) and co-operating with an annular ridge (5) projecting from the surface of said member (3).

3. A joint according to claim 1 or 2, wherein said at least one sealing gasket (7a, 7b; 7'a, 7'b) is received in an annular seat (6a, 6b, 6'a, 6'b) formed in said outer body (1).

4. A joint according to claim 1 or 2, wherein said at least one sealing gasket (7a, 7b; 7'a, 7'b) is received in an annular seat (6a, 6b, 6'a, 6'b) formed in said inner member (3).

5. A joint according to claim 3 or 4, wherein said at least one sealing gasket (7a, 7b; 7'a, 7'b) comprises a lip gasket.

6. A joint according to claim 3 or 4, wherein said at least one sealing gasket (7a, 7b; 7'a, 7'b) comprises a ring of a fluoro-elastomeric material.

7. A joint according to claim 3 or 4, wherein said at least one sealing gasket (7a, 7b; 7'a, 7'b) comprises a ring of a heat resistant material.

8. A joint according to the any of the preceding claims, wherein the free end (1a) of said hollow body (1) has an internal thread for connecting the joint with the gas distribution network.

9. A joint according to the any of the preceding claims, wherein said pipe (4) is connected to the inner member of said joint by welding.

10. A joint according to any of the the preceding claims, wherein the surface of the end (1b) of said outer body (1) facing said inner member (3) is tapered against said inner member (3), thus further preventing the detachment of said inner member (3) from said outer body (1).

## Patentansprüche

1. Eine Drehkupplung für biegsame Rohre zur Verwendung in Brenngasversorgungssystemen umfaßt:
- einen äußeren Hohlkörper (1) von im wesentlichen zylindrischer Form;
- ein inneres rohrförmiges Teil (3) von im Wesentlichen zylindrischer Form, mit einer ersten, innerhalb jenes Körpers (1) untergebrachten Partie und einer zweiten, außerhalb jenes Körpers (1) angeordneten Partie, die dazu ausgelegt ist, mit einem biegsamen Rohr (4) zur Zuführung eines Brenngases verbunden zu werden;
- erste Führungselemente (2, 5) zur Drehung jenes äußeren Körpers (1) in Bezug auf jenes innere Teil (3) und umgekehrt und um einem Austreten jenes Innenteils (3) aus jenem äußeren Körper (1) vorzubeugen, wodurch die Kupplung nicht auseinandergenommen werden kann;
- zumindest einen Dichtring (7a, 7b; 7'a, 7'b), der zwischen jenem äußeren Körper (1) und jenem Innenteil (3) plaziert ist,
**dadurch gekennzeichnet, daß** jenes Innenteil (3) eine Endpartie aufweist, die innerhalb jenes Körpers (1) untergebracht ist und jene Endpartie einen verringerten Durchmesser hat und eine Abstufung (3c) bildet, die mit einer entsprechenden, in jenem Körper (1) ausgebildeten Schulter (8) zusammenwirkt, wobei jene Abstufung (3c) und jene Schulter (8) zweite Führungselemente (3c, 8) bilden, die mit jenen ersten Führungselementen (2, 5) zusammenwirken und zur Gewährleistung der Zentrierung zwischen jenem äußeren Körper (1) und jenem Innenteil (3) angepaßt sind.

2. Eine Kupplung nach Anspruch 1,
wobei jene ersten Führungselemente (2, 5) eine in jenem Körper (1) gebildete Ringnut (2) aufweist, die mit einem ringförmigen Kamm (5) zusammenwirkt, der aus der Oberfläche jenes Teils (3) hervorsteht.

3. Eine Kupplung nach Anspruch 1 oder 2,
wobei jener mindestens eine Dichtring (7a, 7b; 7'a, 7'b) in einem in jenem äußeren Körper (1) eingeformten ringförmigen Sitz (6a, 6b; 6'a, 6'b) aufgenommen ist.

4. Eine Kupplung nach Anspruch 1 oder 2,
wobei jener mindestens eine Dichtring (7a, 7b; 7'a, 7'b) in einem in jenem Innenteil (3) eingeformten ringförmigen Sitz (6a, 6b; 6'a, 6'b) aufgenommen ist.

5. Eine Kupplung nach Anspruch 3 oder 4,
wobei jener mindestens eine Dichtring (7a, 7b; 7'a, 7'b) eine Lippendichtung aufweist.

6. Eine Kupplung nach Anspruch 3 oder 4,
wobei jener mindestens eine Dichtring (7a, 7b; 7'a, 7'b) einen Ring aus fluorelastischem Material aufweist.

7. Eine Kupplung nach Anspruch 3 oder 4,
wobei jener mindestens eine Dichtring (7a, 7b; 7'a, 7'b) einen Ring aus wärmebeständigem Material aufweist.

8. Eine Kupplung nach einem der vorhergehenden Ansprüche,
wobei das freie Ende (1a) jenes Hohlkörpers (1) ein Innengewinde zum Anschluß der Kupplung an das Gasverteilungsnetz aufweist.

9. Eine Kupplung nach einem der vorhergehenden Ansprüche,
wobei jenes Rohr (4) mit dem Innenteil jener Kupplung durch Schweißen verbunden ist.

10. Eine Kupplung nach einem der vorhergehenden Ansprüche,
wobei die dem Innenteil (3) gegenüberliegende Fläche am Ende (1b) jenes äußeren Körpers (1) gegen das Innenteil (3) kegelig ist und so außerdem einer Abtrennung jenes Innenteils (3) von jenem äußeren Körper (1) vorbeugt.

## Revendications

1. Joint rotatif destiné à des tuyaux souples utilisés dans des systèmes servant à fournir un gaz combustible, comprenant :
- un corps creux extérieur (1) de configuration essentiellement cylindrique ;
- un élément tubulaire intérieur (3) de configuration essentiellement cylindrique, comportant une première partie logée à l'intérieur dudit corps (1) et une seconde partie disposée à l'extérieur dudit corps (1) et adapté pour être raccordé à un tuyau souple (4) destiné à fournir un gaz combustible ;
- des premiers moyens de guidage (2, 5) pour la rotation dudit corps extérieur (1) par rapport audit élément intérieur (3) et vice-versa, et empêchant ledit élément intérieur (3) de sortir dudit corps extérieur (1) de façon que ledit joint ne puisse pas être désassemblé ;
- au moins un joint d'étanchéité (7a, 7b ; 7'a,7'b) placé entre ledit corps extérieur (1) et ledit élément intérieur (3),
**caractérisé en ce que** ledit élément intérieur (3) comprend une partie d'extrémité qui est logée dans ledit corps (1), ladite partie d'extrémité étant d'un diamètre réduit et définissant un gradin (3c) qui coopère avec un épaulement correspondant (8) formé dans ledit corps (1), de sorte que ledit gradin (3c) et ledit épaulement (8) définissent des seconds moyens de guidage (3c, 8) coopérant avec lesdits premiers moyens de guidage (2, 5) et étant adaptés pour assurer le centrage entre ledit corps extérieur (1) et ledit élément intérieur (3).

2. Joint selon la revendication 1, dans lequel lesdits premiers moyens de guidage (2, 5) comprennent une gorge annulaire (2) formée dans ledit corps (1) et coopérant avec une nervure annulaire (5) en relief à partir de la surface dudit élément (3).

3. Joint selon la revendication 1 ou 2, dans lequel ledit (lesdits) joint(s) d'étanchéité (7a, 7b ; 7'a, 7'b) est (sont) reçu(s) dans une embase annulaire (6a, 6b, 6'a, 6'b) formée dans ledit corps extérieur (1).

4. Joint selon la revendication 1 ou 2, dans lequel ledit (lesdits) joint(s) d'étanchéité (7a, 7b ; 7'a, 7'b) est (sont) reçu(s) dans une embase annulaire (6a, 6b, 6'a, 6'b) formée dans ledit élément intérieur (3).

5. Joint selon la revendication 3 ou 4, dans lequel ledit (lesdits) joint(s) d'étanchéité (7a, 7b ; 7'a, 7'b) comprend (comprennent) un joint à lèvre.

6. Joint selon la revendication 3 ou 4 dans lequel ledit (lesdits) joint(s) d'étanchéité (7a, 7b ; 7'a, 7'b) comprend (comprennent) un anneau constitué d'un matériau fluoro-élastomère.

7. Joint selon la revendication 3 ou 4, dans lequel ledit (lesdits) joint(s) d'étanchéité (7a, 7b ; 7'a, 7'b) comprend (comprennent) un anneau constitué d'un matériau résistant à la chaleur.

8. Joint selon l'une quelconque des revendications précédentes, dans lequel l'extrémité libre (1a) dudit corps creux (1) présente un filetage interne pour raccorder le joint au réseau de distribution de gaz.

9. Joint selon l'une quelconque des revendications précédentes dans lequel ledit tuyau (4) est raccordé à l'élément intérieur dudit joint par soudure.

10. Joint selon l'une quelconque des revendications précédentes dans lequel la surface de l'extrémité (1b) dudit corps extérieur (1) faisant face audit élément intérieur (3) est biseautée contre ledit élément intérieur (3), empêchant ainsi davantage ledit élément intérieur (3) de se détacher dudit corps extérieur (1).
